# EUROPEAN PATENT SPECIFICATION

(11) **EP 0 439 959 B1**
(45) Date of publication and mention of the grant of the patent: **22.03.1995**
(21) Application number: 90314300.6
(22) Date of filing: 27.12.1990
(51) Int. Cl.: B60P 7/15, B60P 7/06

(54) **Improvement in and relating to load restraint on vehicles and containers**
Verbesserung an Rückhalteeinrichtung für Fahrzeuge und Container
Amélioration de et en rapport avec la retenue de charge dans des véhicules et conteneurs

(30) Priority: 29.01.1990 GB 9001937
(43) Date of publication of application: 07.08.1991
(73) Proprietor: AVELING BARFORD (MACHINES) PLC, GB-Lincolnshire NG31 6JE (GB)
(72) Inventor: Davis, Robert Clive Browning, Thirsk, North Yorkshire (GB)
(74) Representative: Allen, Oliver John Richard

(56) References cited:
- WO-A-89/10857
- CH-A- 611 560
- GB-A- 1 597 532
- GB-A- 2 138 366
- US-A- 2 437 832

## Description

This invention relates to vehicles such as trailers, semi-trailers, lorries and vans and to containers, all for transporting goods.

Various arrangements are known for restraining the movement of goods carried in transport vehicles and containers. One known arrangement employed in the type of vehicle or container known as a 'curtain-sider' is described below. Curtain-sided vehicles have four corner posts extending up from the vehicle bed, the two front and two rear corner posts being interconnected at their upper ends by cross beams. One or more longitudinal members extend between the end cross beams and serve to support the roof. The vehicle therefore has open sides which are covered by curtains suspended from rails, known as cant rails, which extend between the front and rear corner posts. The vehicle may have additional side pillars to help support the roof which are mounted between the cant rails and the vehicle bed. The side pillars are either removable or so mounted that they can be slid along to one end of the vehicle to allow side loading of the vehicle. The front and rear ends of the vehicles are closed by bulkheads or, at the rear, doors.

To restrain goods carried in curtain-sided vehicles or containers, in particular to restrain goods carried in cages or pallets which are mounted on wheels, in one known arrangement webbing straps are connected between the corner posts and the intermediate pillars along the vehicle or container sides at an appropriate height from the vehicle bed. These straps extending along the sides of the vehicle or container are intended to restrain the goods from lateral movement. To restrain the goods from moving longitudinally relative the vehicle, metal bars are connected across the vehicle between the intermediate pillars, and, additional webbing straps are secured between the two side straps.

This arrangement has been found to have several disadvantages. Firstly it is difficult to tension the side straps.

Secondly, while the lateral straps can be placed in any desired position depending on the load being carried, the position of the side straps is fixed. The intermediate pillars must be evenly spaced along the sides of the vehicle if they are to provide efficient support and therefore the location of the lateral metal bars is also essentially fixed. Furthermore, normally only one or two intermediate pillars are provided so that only one or two bars can be mounted across the vehicle. Therefore it is normally difficult to arrange the straps and bars so that the goods are fully restrained both laterally and longitudinally relative to the vehicle or container.

It has further been found that when the goods are carried in wheeled cartons or cages, if the cartons or cages move into contact with the restraining straps they tend to bounce off them which can lead to damage of the cartons or cages and the goods carried therein.

Swiss Patent 611560, which represents the closest prior art, describes a vehicle, the load space of which is divided by internal partitioning into a number of compartments. Each compartment is provided with a U-shaped restraint device, the arms of the device being connected at their ends to the roof of the compartment. A spring bias the device towards a position in which the web abuts the rear of the compartment and, therefore, holds it against the front face of goods in the compartment.

A vehicle or container for carrying goods, in accordance with the invention, has at least one rigid load restraining member securable in an operational position in which a first section thereof extends laterally across the vehicle or container load space at a height above the floor thereof and two second sections of the restraining member extend respectively on either side of the first section at an angle to the vertical in planes generally parallel to the sides of the load space, the first and second sections serving respectively to provide longitudinal and lateral restraint of goods carried in the load space, characterised in that two or more load restraining members are provided which, in the operational position thereof, divide the load space into two or more longitudinal regions, the first sections of the load restraining members and the front bulkhead and/or the rear bulkhead or rear doors of the vehicle or container together providing longitudinal restraint of goods carried in each region and the second sections of the load restraining members providing lateral restraint of goods carried in each region.

With this arrangement lateral restraint of goods carried in the vehicle or container is provided by the two second sections of the restraining member. Furthermore the goods can be restrained longitudinally, between the first section of each restraining member and the front bulkhead of the vehicle or container or the rear bulkhead or rear doors, whichever is provided at the rear of the vehicle or container, or the first section of another load restraining member. The restraining member is rigid so that the tendency of goods to bounce thereof is much less than that with the known arrangement in which webbing straps are employed.

Preferably, the load restraining members are mounted to the roof of the vehicle or container in such a way that each is moveable between two positions; the operational position and a second position in which the member lies adjacent the roof of the load space of the vehicle or container. Means is provided for securing the load restraining members in the operational position. The means may comprise straps connectable between part of each restraining member, suitably the first section thereof, and the floor of the load space of the vehicle or container.

The advantage of this is that, when the restraining members are not required, they can be moved into the second position and will not obstruct the loading of goods into the vehicle or container nor reduce significantly the capacity of the load space thereof. Furthermore, the arrangement facilitates loading when the restraining members are required since the restraining members can be positioned adjacent the roof to allow goods to be loaded without obstruction and then sequentially moved into position to secure the goods against movement.

The second sections of each restraining member may be in the form of elongate members, attached at one end to the first section and at the other end to the roof of the load space of the vehicle or container. The extreme portions of the second sections adjacent the ends thereof which are attached to the roof may be angled, relative to the remainder of the sections, towards each other. This angling means that the load restraining members can be attached to the roof intermediate the cant rails, so these are unaffected by it, but, when the load restraining members are in the operational position, the straight portions of the second sections can lie below the cant rails and so not reduce the lateral extent of the load space.

The restraining members may be generally U-shaped.

One of the restraining members may have second sections, the length of which is variable. This allows the restraining member to be employed with loads of different lengths. Furthermore a variable length restraining member is particularly suitable for use at the rear of the vehicle. The second sections of the load restraining members in the operational position extend diagonally across the sides of the load space between their attachments to the roof and the first section whereas in the stowed-away position they extend along the vehicle roof from the attachment points. The length of the second sections of the rearmost member should be such as to allow location of the first section, in the operational position, immediately adjacent the vehicle or container doors to maximise the amount of load which can be carried. However second sections of a length to allow this when in the diagonal orientation of the operational position would, in the stowed-away position, extend out of the vehicle and prevent closing of the doors. By making the rearmost member with variable length second sections, one avoids the choice between it being so short as to reduce the usable load space or so long as to interfere with the doors.

The invention will now be further described by way of example with reference to the accompanying drawings in which:
Fig. 1 is a side view of a vehicle or container in accordance with the invention;
Fig. 2 is a side view of the body of a vehicle or container similar to that shown in Fig. 1 but of greater length;
Fig. 3 is view taken along line A-A of the body of Fig. 2;
Fig. 4 is a plan view, partly sectional, of the body of Fig. 2 taken along the line B-B of Fig. 3;

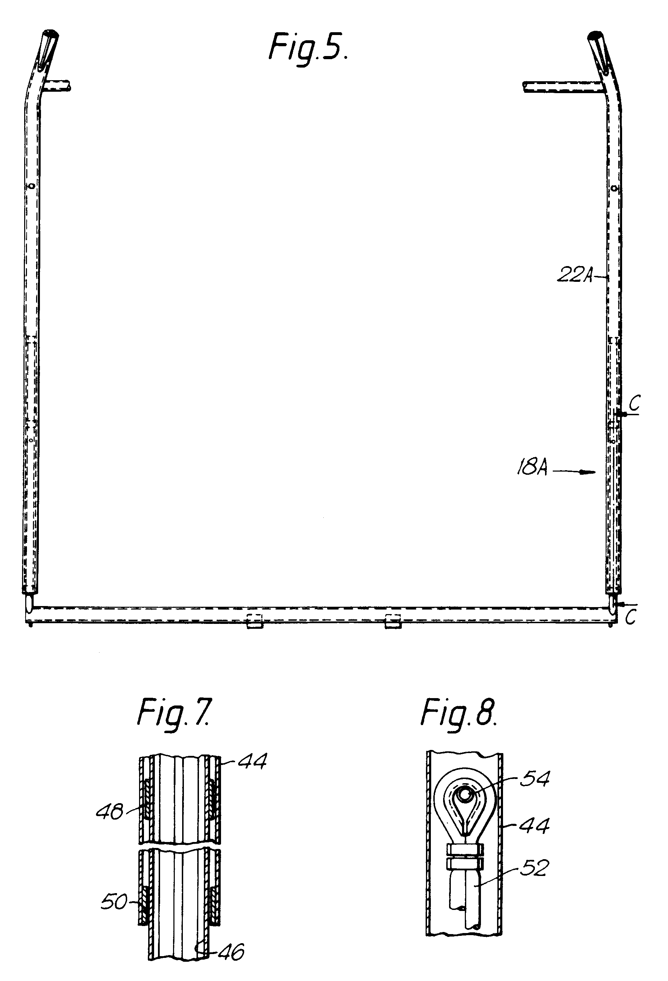

Fig. 5 is a front view of the rearmost load restraining member of the body of Fig. 2;
Fig. 6 is a side view of the load restraining member of Fig. 5;
Fig. 7 is a sectional view of part of the load restraining member of Fig. 5 taken along the line C-C thereof, and,
Fig. 8 is a partly sectional view of the load restraining member of Fig. 5 taken along line D-D of Fig. 6.

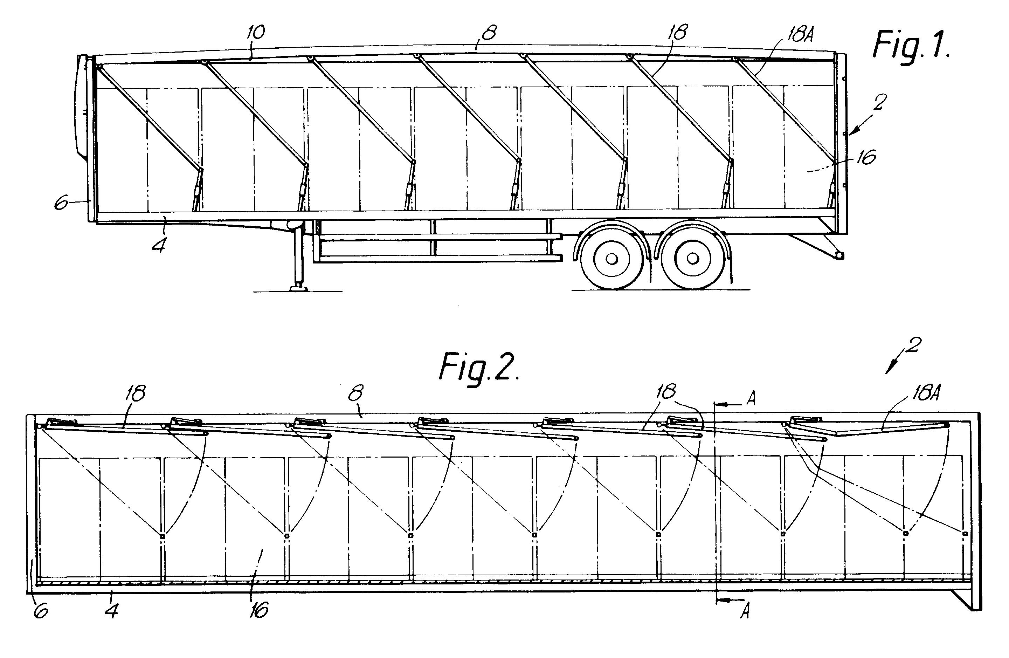

The vehicle body 2 shown in Figs. 1 to 3 has a floor 4 from each corner of which a corner post 6 extends upwardly. The vehicle 2 further includes a roof 8 supported by a spine 10 connected between end beams (not shown) which are themselves carried between the corner posts 6. Cant rails 12 extend along the edges of the roof 8 between the corner posts 6. Raves 14 are attached along the side edges of the floor 4. The sides of the vehicle body 2 can be closed by curtains suspended from the cant rails 12, the curtains being held down in place and tensioned by tensioning straps, one end of which is secured to the curtains and the other end of which is latched onto the raves 14.

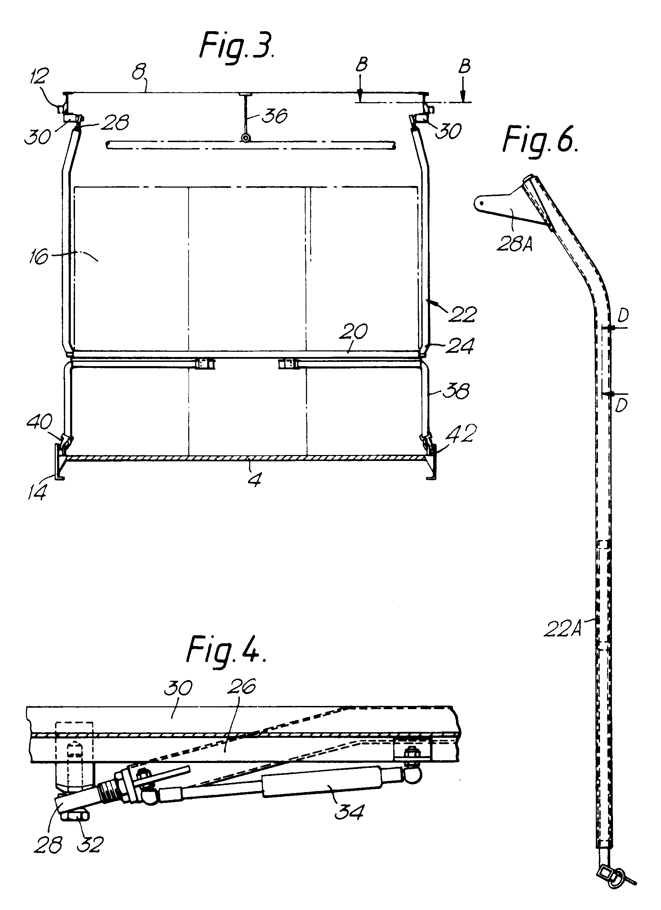

A plurality of wheel mounted cargo containing cages 16 are carried in the vehicle body 2. The cages 16 are held in position by restraining members 18 which are shown in full outline in Figs. 1 and 3 and in dotted outline in Fig. 2 in a first, operational, position in which a first section 20 thereof extends laterally across the load space of the vehicle 2 and two second sections 22 extend diagonally across a plane generally parallel to the sides of the vehicle body 2, one on either side of the first section 20.

The first and second sections 20, 22 of the restraining member 18 form a generally U-shaped frame. The second sections 22 are each connected at one end 24 to the first section 20 to form the U-shaped frame. At their other end 26 each of the second sections 22 is provided with a bearing 28 connected thereto. The bearings 28 are also connected to pivet blocks 30 carried on the cant rails 12 of the vehicle body 2 by way of mounting bolts 32. The bearings 28 and hence the U-shaped from formed by the first and second sections 20, 22, can rotate around the mounting bolts 32.

A piston 34, in the form of, for example, a gas-strut, is mounted between the end 26 of each second section 22 and the associated pivet block 30. In the position shown in full outline in Figs.1 and 3 the gas-struts 34 are retracted. Extension of struts 34 to the position shown in Fig. 4 causes the restraining members 18 to move upwards, rotating around mounting bolts 32, into the position shown in full outline in Fig. 2. In this position the restraining members 18 are located adjacent the roof 8 of the vehicle body 2. The restraining members 18 can therefore be stowed away against the roof 8 of the vehicle body 2 when they are not required or when the vehicle body 2 is to be loaded.

The force exerted by the struts 34 is set so that not only is it sufficient to hold the restraining members 18 in the stowed-away position but also so that it can just be overcome by the force of a man pulling down on the members 18. Thus to bring the restraining members 18 back to the operational, cargo restraint, position, they are simply pulled manually downwards and handles 36 are provided for this purpose. This action will cause the struts 34 to fully retract.

In the cargo restraint position, the restraining members 18 are held in place against the forces exerted by the struts 34 tending to lift them upwards, by latching buckle/strap assemblies. The assemblies consists of straps 38 connected to the first section 20 of restraining members 18. The straps 38 are provided with buckles 40 which can be fastened to rings 42 set in the floor 4 of the vehicle body 2 to hold the restraining members 18 in the operational position. The rings 40 are fitted near the side rails 14 so that they can be reached from the sides of the vehicle 2 as well as from the interior thereof. The buckle/strap assemblies 38, 40 may be of the type employed to hold down and tension curtains in curtain-sided trailers. A pair of rings (not shown) can be provided on the first sections 20 of the restraining members 18 to which the buckles 40 can be hooked when the restraining members 18 are in the stowed-away position to stop the straps 38 from dangling down into the load space.

It will be noted from the Figures that the mounting points for the restraining members 18 are spaced some distance inwardly from the cant rails 12 of the vehicle body 2 but the second sections 22 of the restraining members 18 lie, in the operational position, generally below the cant rails 12. This is made possible by angling a portion of the second sections 22, at the end 26 thereof by which they are mounted to the vehicle body 2, towards each other. The location of the main portions of the second sections 22 in the operational position below the cant rails 12 means that there is no reduction in the available load space of the vehicle body 2.

As noted above curtains may be hung from the cant rails 12 to close the sides of the vehicle body 2. The angling of the upper ends of the second sections 22 of the restraining members 18 also serves to protect the curtains since the mounting points are moved away from the curtain location. The lower ends 24 of the second sections 22 are bent round slightly to prevent any damage to the curtains in the region of the connection of the second sections 22 to the first sections 20.

With the restraining members 18 in the operational position, the cargo is prevented from moving longitudinally along the load space by being trapped between the front wall of the space or the rear wall/doors of the space and the first section 20 of a restraining member 18 or between the first sections 20 of two adjacent restraining members 18. The goods are held from moving laterally by the second sections 22 of the restraining members 18. The diagonal orientation of the second sections 22 allow their restraining force to be applied over a significant longitudinal distance. For example, in this specific arrangement shown, two rows of cages 16 are held by each restraining member 18, the diagonal orientation of the second sections 22 of the restraining member 18 ensuring that there is sufficient overlap thereof with both rows of cages 16 to hold these firmly against movement within the load space during transportation.

The restraining member 18A at the rear of the vehicle body 2 differs from the other restraining members 18. These differences will now be described. The parts of the restraining member 18A which are the same as those of the other restraining members 18 will be given the same reference numerals but with the additional suffix A. The main difference between the rearmost restraining member 18A and the other restraining members 18 is that the second sections 22A thereof have a length which is variable. Each second section 22A is formed from two tubular members 44 and 46, the second of which 46 is dimensioned such that it can be telescopically received within the first tubular member 44. The second sections 22A have their shortest length when the second tubular members 46 thereof are fully retracted within the first tubular member 48. The length of the second sections 22A is increased by pulling the second tubular members 46 out of the first tubular members 44 until a brush 48 mounted on each tubular member 46 abuts against a brush 50 mounted at the end of each first tubular member 44. Brushes 48 and 50 therefore define the maximum extension of the second sections 22A.

The second tubular members 46 are urged towards a position in which they are fully retracted within the first tubular members 44 by an elasticated rope 52. The ropes 52 are carried within the first tubular members 44 on a pin 54 extending thereacross above the upper extreme position of the second tubular members 46. Thus when no force is applied to the first section 20A of the restraining member 18A in a direction along the line of the second sections 22A thereof, sections 22A will be at their minimum length. This will be the case when the restraining member 18A is in stowed-away position as shown in full outline in Fig. 2. Restraining frame 18A is also shown in that Figure by dotted line X in the operational but unextended position in which it restrains two rows of cages 16. Restraining frame 18A is further shown in Fig. 2 by dotted line Y in the operational and extended position in which the second sections thereof 22A are extended so that three rows of cages 16 can be accommodated. It will be noted that in the extended position, the first section 20A is closely adjacent the rear extremity of the van body 2 so that maximum utilization of the load space thereof is being achieved. Thus by making the second sections 22A extensible, the rearmost restraining frame 18A is operable to restrain different numbers of cages 16. Conversly the retractibility of the frame 18A means that it can take up the extended operational position in which the first section 20A thereof is adjacent the rear end of the vehicle body 2 but in the stowed-away position it does not extend beyond the rear end of the vehicle body 2. The retractibility therefore accommodates the fact that in the operational position the second sections 22A are diagonal but in the stowed-away position they extend generally parallel to the roof 8. The retractability allows the second sections 22A to be longer in the diagonal orientation, therefore permitting full load-space utilisation, but shorter in the stowed-away position with the result that they do not extend beyond the rear of the vehicle body 2.

The dimensions of the restraint members 18 can be adjusted to accommodate any type of cargo holder. As shown in the Figs. the dimensions are preferably such that the second sections 22 abut, or are closely adjacent to the sides of the cargo holders 16 and the distance between the front wall of the vehicle body 2 and first section 20 of the forwardmost restraining member and that between the first section 20 of adjacent restraining members 18 is equal to the longitudinal length of the cargo holders 16. The latter feature means that as each batch of cargo holders 16 is loaded and the appropriate restraining member 18 pulled down, it pushes the cargo holders of the just-loaded batch together and against the next forward frame (or the front bulkhead).

The sections 20, 22 of the restraining members 18 consist of tubular members of a metal or metal alloy. They are therefore rigid and the tendency for cargo to rebound from them will be much less than with the known straps.

It will be appreciated, although decribed specifically above in relation to a curtain-sided trailer, that the restraining members could be provided for any type of vehicle or container.

The arrangement is relatively simple and permits a vehicle or container to be used to carry loads both when restraint is required and when it is not. It allows close confinement of load but does not decrease the usable load space either when in use or when not in use. It can be adapted to give good control of any specified cargo size.

## Claims

1. A vehicle or container (2) for carrying goods having at least one rigid load restraining member (18) securable in an operational position in which a first section (20) thereof extends laterally across the vehicle or container load space at a height above the floor (4) thereof and two second sections (22) of the restraining member (18) extend respectively on either side of the first section (20) at an angle to the vertical in planes generally parallel to the sides of the load space, the first and second sections (20, 22) serving respectively to provide longitudinal and lateral restraint of goods (16) carried in the load space, characterised in that two or more load restraining members (18) are provided which, in the operational position thereof, divide the load space into two or more longitudinal regions, the first sections (20) of the load restraining members (18) and the front bulkhead and/or the rear bulkhead or rear doors of the vehicle or container (2) together providing longitudinal restraint of goods (16) carried in each region and the second sections (22) of the load restraining members (18) providing lateral restraint of goods (16) carried in each region.

2. A vehicle or container as claimed in Claim 1, in which the load restraining members (18) are mounted to the roof (8) of the vehicle or container in such a way that each is movable between two positions: the operational position and a second position in which the member (18) lies adjacent the roof (8) of the load space of the vehicle or container.

3. A vehicle or container as claimed in Claim 1 or Claim 2, wherein means (38, 40, 42) is provided for securing each load restraining member (18) in the operational position.

4. A vehicle or container as claimed in Claim 3, wherein the means for securing each load restraining member (18) in the operational position comprises straps (38) connectable between part of the restraining member (18) and the floor (4) of the load space of the vehicle or container.

5. A vehicle or container as claimed in any preceding Claim, wherein the second sections (22) of each restraining member (18) are in the form of elongate members, attached at one end (24) to the first section (20) and at the other end (26) to the roof (8) of the load space of the vehicle or container.

6. A vehicle or container as claimed in Claim 5, wherein the extreme portions of the second sections (22) of the load restraining members (18), adjacent the ends (24) thereof which are attached to the roof (8) of the load space, are angled relative the remainder of the sections (22) towards each other.

7. A vehicle or container as claimed in any preceding Claim, wherein each restraining member (18) is generally U-shaped.

8. A vehicle or container as claimed in any preceding Claim, wherein one of the restraining members (18A) has second sections (22A), the length of which is variable.

9. A vehicle or container as claimed in Claim 8, wherein the variable length second sections (22A) are telescopic.

10. A vehicle or container as claimed in any one of Claims 2 to 9, in which means (34) is provided which continuously urge the load restraining members (18) away from the operational position towards the second position in which each lies adjacent the roof (8) of the load space of the vehicle or container.

## Patentansprüche

1. Fahrzeug bzw. Container (2) zum Transport von Gütern mit mindestens einem starren Ladungsbefestigungsteil (18), das so in einer Arbeitsposition befestigt werden kann, daß ein erster Abschnitt (20) dieses Teils (18) quer zum Laderaum des Fahrzeugs bzw. Containers (2) in einer Höhe oberhalb des Laderaumbodens (4) verläuft und zwei zweite Abschnitte (22) des Befestigungsteils (18) jeweils an einer Seite des ersten Abschnitts (20) befinden, und zwar in einem Winkel zur Vertikalebene im allgemeinen parallel zu den Seiten des Laderaums, wobei die ersten und zweiten Abschnitte (20, 22) jeweils zur Längsbefestigung bzw. zur seitlichen Befestigung von im Laderaum transportierten Gütern (16) dienen, dadurch gekennzeichnet, daß es mehrere Ladungsbefestigungsteile (18) gibt, die in ihrer Arbeitsposition den Laderaum in zwei oder mehrere Längsbereiche unterteilen, und daß die ersten Abschnitte (20) dieser Ladungsbefestigungsteile (18) und die vordere Stirnwand und/oder die hintere Stirnwand bzw. die Hintertüren des Fahrzeugs bzw. Containers (2) gemeinsam eine Längssicherung der in jedem Bereich transportierten Güter (16) ermöglichen, wogegen die zweiten Abschnitte (22) der Ladungsbefestigungsteile (18) eine seitliche Sicherung der in jedem Bereich transportierten Güter (16) gewährleisten.

2. Fahrzeug bzw. Container entsprechend Anspruch 1, bei dem die Ladungsbefestigungsteile (18) so am Dach (8) des Fahrzeugs bzw. Containers (2) befestigt sind, daß jedes zwischen zwei Positionen beweglich ist: der Arbeitsposition und einer zweiten Position, in der das Befestigungsteil (18) in unmittelbarer Nähe des Laderaumdaches (8) des Fahrzeugs bzw. des Containers (2) liegt.

3. Fahrzeug bzw. Container entsprechend Anspruch 2, bei dem es Vorrichtungen (38, 40, 42) gibt, welche die Befestigungsteile (18) in ihrer Arbeitsposition sichern.

4. Fahrzeug bzw. Container entsprechend Anspruch 3, bei dem die Vorrichtungen zur Sicherung der Befestigungsteile (18) in ihrer Arbeitsposition aus Bändern (38) bestehen, die einen Abschnitt des Befestigungsteils (18) und den Boden (4) des Laderaums des Fahrzeugs bzw. Containers (2) verbinden.

5. Fahrzeug bzw. Container entsprechend allen vorangegangenen Ansprüchen, bei dem die zweiten Abschnitte (22) jedes Befestigungsteils (18) die Form von Verlängerungselementen haben, die an einem Ende (24) mit dem ersten Abschnitt (20) und am anderen Ende (26) mit dem Dach (8) des Laderaums des Fahrzeugs bzw. Containers (2) verbunden sind.

6. Fahrzeug bzw. Container entsprechend Anspruch 5, bei dem die äußersten Teilstücke der zweiten Abschnitte (22) der Ladungsbefestigungsteile (18), die sich unmittelbar neben den am Dach (8) befestigten Enden (24) der zweiten Abschnitte (22) befinden, zueinander und im Verhältnis zum Rest der Abschnitte (22) in einem Winkel stehen.

7. Fahrzeug bzw. Container entsprechend allen vorangegangenen Ansprüchen, bei dem jedes Befestigungsteil (18) eine generelle U-Form hat.

8. Fahrzeug bzw. Container entsprechend allen vorangegangenen Ansprüchen, bei dem eines der Befestigungsteile (18A) über zweite Abschnitte (22) verfügt, deren Länge variabel ist.

9. Fahrzeug bzw. Container entsprechend Anspruch 8, bei dem die zweiten Abschnitte (22A) mit variabler Länge teleskopartig aufgebaut sind.

10. Fahrzeug bzw. Container entsprechend den vorangegangenen Ansprüchen 2 bis 9, bei dem Vorrichtungen (34) ständig dafür sorgen, daß die Ladungsbefestigungsteile (18) aus der Arbeitsposition selbsttätig in die zweite Position übergehen, in der jedes Ladungsbefestigungsteil (18) in unmittelbarer Nähe des Daches (8) des Laderaums des Fahrzeugs bzw. Containers (2) liegt.

## Revendications

1. Véhicule ou conteneur (2) pour le transport de marchandises, pourvu d'au moins un élément rigide de retenue de la charge (18), pouvant être fixé en position de fonctionnement, dans lequel un de ses premiers tronçons (20) s'étend latéralement au travers de l'espace de chargement du vehicule ou du conteneur, à une certaine hauteur au-dessus de son plancher (4), et dans lequel deux seconds tronçons (22) de l'élément de retenue (18) s'étendent respectivement de chaque côté du premier troncon (20) obliquement par rapport à la verticale dans des plans globalement parallèles aux côtés de l'espace de chargement, le premier et le second tronçons (20, 22) servant respectivement à fournir une retenue longitudinale et latérale de la marchandise (16) transportée dans l'espace de chargement, caractérisé en ce qu'on a prévu au moins deux éléments de retenue de la charge (18) qui, en position de fonctionnement, divisent l'espace de chargement en au moins deux zones longitudinales, les premiers tronçons (20) des éléments de retenue de la charge (18) et la cloison de séparation frontale et/ou la cloison de séparation arrière ou les portes arrière du véhicule ou du conteneur (2) constituant ensemble une retenue longitudinale de la marchandise (16) transportée dans chaque zone, et en ce que les seconds tronçons (22) des éléments de retenue de la charge (18) fournissent une retenue latérale de la marchandise (16) transportée dans chaque zone.

2. Véhicule ou conteneur selon la revendication 1, dans lequel les éléments de retenue de la charge (18) sont montés sur le toit (8) du véhicule ou du conteneur, de telle sorte que chacun puisse se déplacer entre deux positions : la position de fonctionnement et une seconde position, dans laquelle l'élément (18) est placé adjacent au toit (8) de l'espace de chargement du véhicule ou du conteneur.

3. Véhicule ou conteneur selon la revendication 1 ou la revendication 2, dans lequel les moyens (38, 40, 42) sont prévus pour fixer chaque élément de retenue de la charge (18) dans la position de fonctionnement.

4. Véhicule ou conteneur selon la revendication 3, dans lequel les moyens pour fixer chaque élément de retenue de la charge (18) dans la position de fonctionnement comprenant des courroies (38) pouvant être reliées entre des parties de l'élément de retenue (18) et le plancher (4) de l'espace de chargement du véhicule ou conteneur.

5. Véhicule ou conteneur selon l'une quelconque des revendications précédentes, dans lequel les seconds tronçons (22) de chaque élément de retenue (18) ont la forme d'éléments allongés, fixés par une extrémité (24) au premier tronçon (20) et par l'autre extrémité (24) au premier tronçon (20) et par l'autre extrémité (26) au toit (8) de l'espace de chargement du véhicule ou conteneur.

6. Véhicule ou conteneur selon la revendication 5, dans lequel les parties extrêmes des seconds tronçons (22) des éléments de retenue de la charge (18), adjacentes à leurs extrémités (24), qui sont fixées au toit (8) de l'espace de chargement, sont obliques par rapport au reste des tronçons (22), en se rapprochant l'une de l'autre.

7. Véhicule ou conteneur selon l'une quelconque des revendications précédentes, dans lequel chaque élément de retenue (18) a globalement une forme en U.

8. Véhicule ou conteneur selon l'une quelconque des revendications précédentes, dans lequel un des éléments de retenue (18A) présente des seconds tronçons (22A), dont la longueur est variable.

9. Véhicule ou conteneur selon la revendication 8, dans lequel les seconds tronçons de longueur variable (22A) sont téléscopiques.

10. Véhicule ou conteneur selon l'une quelconque des revendications 2 à 9, dans lequel des moyens (34) sont prévus pour pousser de façon continue les éléments de retenue de la charge (18), en s'éloignant de la position de fonctionnement vers la seconde position, dans laquelle chacun se trouve adjacent au toit (8) de l'espace de chargement du véhicule ou conteneur.
